Europäisches Patentamt

European Patent Office

Office européen des brevets

(11) Publication number: **0 104 824**
A2

# EUROPEAN PATENT APPLICATION

(21) Application number: 83305286.3

(22) Date of filing: 09.09.83

(51) Int. Cl.³: **G 06 K 9/20**

(30) Priority: 23.09.82 US 422127

(43) Date of publication of application:
04.04.84 Bulletin 84/14

(84) Designated Contracting States:
DE FR GB IT NL SE

(71) Applicant: TRW Inc.
One Space Park Building E2/7073
Redondo Beach California 90278(US)

(72) Inventor: Marom, Emanuel
235 Denslow Avenue
Los Angeles California 90049(US)

(74) Representative: Allden, Thomas Stanley et al,
A.A. THORNTON & CO. Northumberland House 303-306
High Holborn
London WC1V 7LE(GB)

(54) Method for contrast enhancement of embossed information.

(57) A technique for enhancing the contrast between embossed and background areas of a plastic card, such as a credit card. The card is illuminated through a uniform Ronchi grating and is also viewed through the grating from a different angle. Whether a portion of the card is viewed as a light area or dark area depends in part upon the distance of the grating from the card's surface. By appropriate selection of the position of the grating, the period of the grating, and the angles of light incidence and reflection, embossed areas will be optically contrasted with background areas of the card.

FIG. 1

EP 0 104 824 A2

-1-

METHOD FOR CONTRAST ENHANCEMENT
OF EMBOSSED INFORMATION

BACKGROUND OF THE INVENTION

This invention relates generally to optical character recognition (OCR) techniques, and, more particularly, to an improved OCR technique for reading embossed information.

Optical character recognition devices are used in a variety of applications in which characters or patterns are read from documents or from other items, such as identification cards, fingerprint records, and so forth. Basically, most OCR devices operate by optically scanning the surface of a document or other item, and converting detected variations in contrast, color, or other optical property into corresponding electrical signals. The signals, usually in digital form, can then be compared with signal patterns that would result from scanning selected characters or symbols. The recognizable characters or symbols may be part of printed textual information, or, in more complex devices, may be complex patterns such as fingerprints or written signatures.

One area to which OCR devices have not been successfully applied is in the reading of embossed information on plastic cards, such as bank credit cards, identification cards, and so forth. Embossed characters on such cards are used to form an imprint on a document, such as a sales slip, but usually are not of a contrasting color, and are therefore difficult to read by OCR techniques. To overcome this problem, many credit cards or identification cards include a strip of magnetic material on which card holder information is encoded. When the card is moved past a magnetic transducer at a relatively uniform speed, the information is read from the magnetic strip and decoded electrically. The magnetically coded information is, of course, subject to inadvertent or deliberate alteration.

Alternatively, the embossed information can be read by first making an ink imprint in the same manner that credit card sales are recorded, then reading the imprint with an OCR device. Of course, it would be preferable to read the data directly from the card itself, but direct illumination provides little or no contrast between the areas raised by embossing and the background areas of the card surface. Illuminating the card in a non-perpendicular direction provides some contrast in the form of shadows of the embossed areas, but this approach is generally still not reliable enough for use with conventional OCR devices.

It will be appreciated from the foregoing that, prior to this invention, there has been a need for a simple technique to employ existing optical character recognition devices to read embossed patterns or characters on plastic cards and the like. The present invention satisfies this need.

## SUMMARY OF THE INVENTION

The present invention resides in a method of contrast enhancement to facilitate optical recognition of embossed information. The essence of the invention lies in placing a Ronchi grating in a parallel relationship to an embossed card. A Ronchi grating is a uniform pattern of parallel, equally spaced opaque and transparent stripes. More precisely, the opaque stripes have the same width as the spacings between the stripes. The method of the invention includes illuminating the card through the grating from a source of essentially parallel light rays, and observing the card through the grating from an angular position, with respect to the card, different from that of the light source. The angle of incidence of the light on the card and grating, the angle, with respect to the card, at which reflected light is observed, the period of the grating, and the distance of the grating from the card, can be selected such that embossed areas of the card are optically contrasted with non-embossed areas. These parameters may be selected such that embossed areas are viewed as light areas and the non-embossed areas as dark areas, or vice versa. In one embodiment of the invention, the spacing between the grating and the card is adjusted until the grating is in contact with the raised or embossed portions of the card, which can then be viewed as relatively light areas, and the angles of incidence and reflection of light are then selected such that the non-embossed areas of the card appear as dark areas.

The orientation of the grating with respect to characters on the card is not critical to the invention, but it may be preferable in some cases to orient the grating such that the parallel lines of the grating are perpendicular to the direction of scanning in the OCR device. This would facilitate discrimination of the detected character from possible noise, since the resulting information signal is inherently modulated by a carrier wave provided by the periodicity of the grating

-4-

as it is scanned by the OCR device.

The method of the invention can also be used to detect embossed characters on the reverse face of a plastic card. The embossed characters then appear as depressions in the surface of the card. If the grating is placed in contact with the reverse face of the card, the letters are detected as dark areas on a light background.

The visibility of the embossed characters may be diminished if the material on which they are formed is not of an optically uniform texture. Typically, the reverse face of a credit card contains a great deal of printed matter, which can reduce the contrast obtained by means of the invention and result in a lower signal-to-noise ratio in the character recognition apparatus. This minor deficiency could, however, be overcome by means of color filtering to reduce the effect of the printed matter.

It will be appreciated from the foregoing that the present invention represents a significant advance in the field of optical character recognition. In particular, the invention provides a simple yet reliable technique for optically reading embossed characters on credit cards and the like. Other aspects and advantages of the invention will become apparent from the following more detailed description, taken in conjunction with the accompanying drawings.

## BRIEF DESCRIPTION OF THE DRAWINGS

FIGURE 1 is a diagrammatic view illustrating the technique of the invention;

FIG. 2 is a diagram illustrating the principle of the invention in enhancing contrast of an embossed area; and

FIG. 3 is a diagram similar to FIG. 2, but shows the grating placed in contact with raised portions of a card surface.

## DESCRIPTION OF THE PREFERRED EMBODIMENT

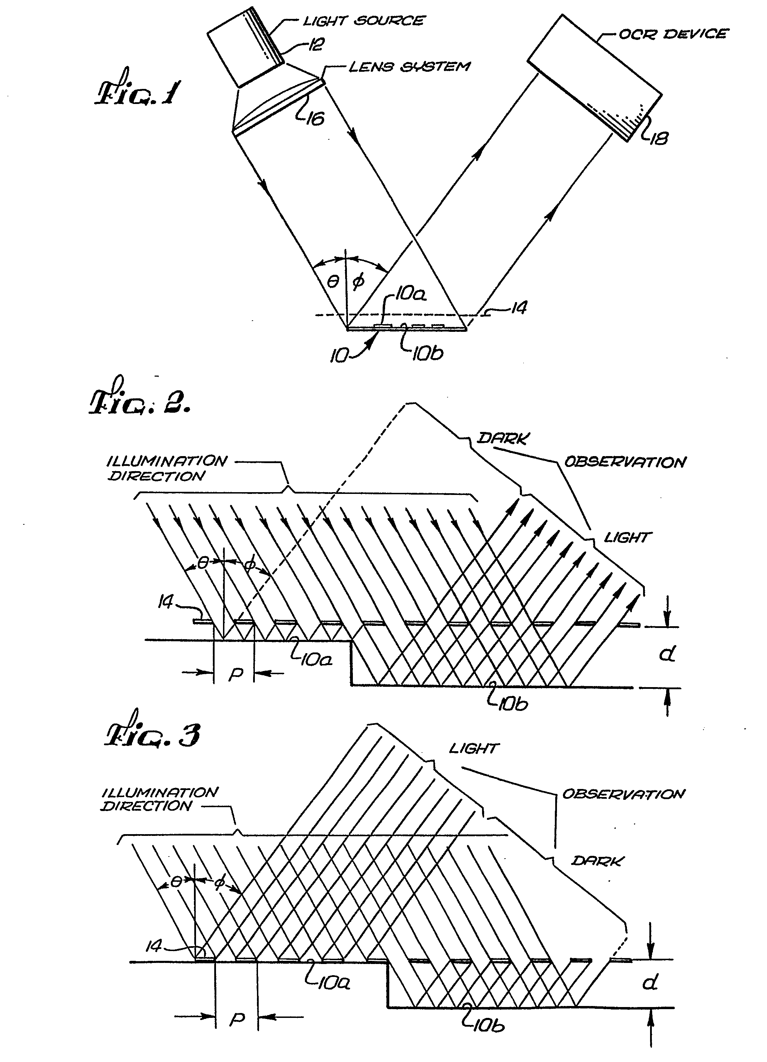

As shown in the drawings for purposes of illustration, the present invention is concerned with a technique for enhancing the contrast between embossed and non-embossed areas of a card, such as a plastic credit card. In accordance with the invention, a plastic card, indicated by reference numeral 10 in FIG. 1, is illuminated by a light source 12 through a Ronchi grating 14 disposed in a parallel relationship with the card. Light from the light source 12 is passed through a lens system 16 and collimated into a parallel beam before it passes through the grating 14. An optical character recognition (OCR) device 18 receives light reflected from the card 10, also through the grating 14.

As will be further explained, the selection of four optical parameters in this arrangement determines whether light received by the OCR device 18 is detected as relatively light or relatively dark. The four parameters are the angle of incidence of light on the card 10, the angle at which light is reflected to the OCR device 18, the period of the grating 14, and the distance between the grating and the card. These parameters can be selected such that light reflected from raised portions 10a of the card is optically contrasted with light reaching the OCR device from non-raised areas indicated at 10b. Depending on the parameter selection, the raised portions 10a may be viewed as darker areas or as lighter areas compared with the non-raised portions 10b. The Ronchi grating 14 has a pattern consisting of alternate opaque and transparent stripes of equal width. As shown in FIG. 2, the grating 14, illumination source 12, and OCR device 18 can be positioned in such a manner that light falling on a raised portion 10a of the card 10 results in a relatively dark region as observed from the OCR device. On the other hand, light falling on a non-raised portion 10b results in a relatively light area as observed from the OCR device. It will be observed from FIG. 2 that light rays passing between the opaque stripes of the grating 14 will form illuminated stripes on the raised portion of the card but that these illuminated stripes will be virtually invisible from the point of observation of the OCR device 18, because they will be blocked by other opaque stripes of the grating. However, illuminated stripes on the non-raised portions 10b of the card are visible through the transparent regions of the grating 14 as observed from the OCR device 18.

The mathematical relationships determining whether a portion of the card 10 will be viewed as a light area or a dark area are as follows:

The surface will appear dark if

$$d (\tan \Theta + \tan \emptyset) = (N+1/2)p, \text{ where } N = 1, 2, \ldots,$$

but it will appear bright if

$$d (\tan \Theta + \tan \emptyset) = Np, \text{ where } N = 1, 2, \ldots,$$

and where:

$d$ = the distance between the grating and the card surface,

$\Theta$ = the angle of incidence of the illumination on the card,

$\emptyset$ = the angle of reflection of light from the card to the OCR device,

and $p$ = the "period" of the grating, i.e., the total width of one opaque stripe and one transparent stripe.

If the angles and distances are appropriately selected in accordance with this mathematical relationship, the embossed areas of the card 10 can be viewed as either lighter or darker than the non-embossed areas. One convenient way of accomplishing this result is to lower the grating 14 until it is in contact with the embossed portions 10a of the card 10, as shown on FIG. 3. The distance d is then equal to the height of the embossed letters above the surface of the card 10. It only remains to adjust the angle of incidence or the angle of reflection of the light such that the non-embossed areas of the card 10 will appear to be relatively dark. Since the grating 14 is in contact with the embossed areas 10a, these will always appear as light areas no matter what the angle of incidence and angle of reflection.

The same technique can be used for reading the card on its reverse face. The embossed areas then appear as depressions below the surface of the face of the card. If the grating is placed in contact with the reverse face of the card, the angles can be selected such that the embossed areas are viewed as relatively dark areas and the background as a light area. The existence of finely printed material on the card 10, particularly on the reverse face, may result in unwanted noise signals in the OCR device 18, but these can be minimized by the use of color filters (not shown), the use of which does not affect operation of the invention.

The orientation of the grating 14 with respect to characters being read from a card is not critical to the invention. However, it may be preferable in some cases to orient the grating at right-angles to the scanning direction of the OCR device 18. This will provide a background oscillatory signal in the nature of a carrier signal, which will facilitate the elimination of noise components.

It will be appreciated from the foregoing that the present invention represents a significant advance in the field of optical character recognition devices. In particular, the invention provides a simple and reliable technique for enhancing the contrast between embossed and other areas of a plastic card, such as a credit card. By this means, embossed information on a credit card can be read using a conventional optical character recognition device. It will also be appreciated that various modifications may be made without departing from the spirit and scope of the invention. Accordingly, the invention is not to be limited except as by the appended claims.

CLAIMS

1. A method for enhancing the contrast of embossed information, comprising the steps of:

placing a Ronchi grating in a parallel relationship to an item bearing embossed information to be read;

illuminating the item through the grating with a source of substantially parallel light rays;

detecting light reflected from the item through the grating to a light detection device; and

selecting the position of the grating and the angles of light incidence and light reflection to provide optical contrast between embossed and non-embossed portions of the item.

2. A method as set forth in claim 1, wherein:

said placing step includes placing the grating in contact with raised portions of the item, to provide maximum light reflection from the raised portions; and

said selecting step includes selecting the angles of incidence and reflection such that opaque portions of the grating block most of the light reflected from non-raised portions of the item.

3. A method as set forth in claim 2, wherein said selecting step yields an angle of incidence $\theta$ and an angle of reflection $\phi$ such that

$$d (\tan \theta + \tan \phi) = (N + 1/2) p,$$

where d is the height of the embossed information with respect to remaining portions of the item, p is the period of the grating, and N is a positive integer.

4. A method as set forth in claim 2, wherein:

the item has a front face with respect to which embossed characters are raised, and a reverse face with respect to which the embossed characters are recessed;

said placing step includes placing the grating in contact with the reverse face of the item; and

the embossed characters are detected as darker, non-raised portions.

5. A method for enhancing the contrast of embossed characters on plastic cards, to facilitate optical character recognition, said method comprising the steps of:

placing a uniform grating in a parallel relationship with the card, the grating having parallel stripes of alternating opaque and transparent quality;

directing substantially parallel rays of light through the grating and onto the card at an angle of incidence $\theta$ to form a plurality of uniformly spaced bands of illumination on the card;

viewing the card through the grating along a viewing direction at an angle $\emptyset$ to the normal direction;

selecting the period and position of the grating and the angles $\theta$ and $\emptyset$ such that the embossed characters are contrasted with remaining portions of the card, since the bands of illumination on the card are observable along the viewing direction only for portions of the card that are a selected distance from the grating.

6. A method as set forth in claim 5, wherein:

said placing step includes placing the grating in contact with raised portions of the card, to provide maximum light reflection from the raised portions; and

said selecting step includes selecting the

angles $\theta$ and $\emptyset$ such that opaque portions of the grating block most of the light reflected from non-raised portions of the card along the viewing direction.

7. A method as set forth in claim 6, wherein said selecting step is performed in accordance with the relationship:

$$d\ (\tan \theta + \tan \emptyset) = N + 1/2)p,$$

where d is the height of the embossed characters with respect to non-embossed portions of the card, p is the period of the grating and N is a positive integer.

8. A method as set forth in claim 6 wherein:

the card has a front face on which the embossed characters are formed as raised portions, and a reverse face on which the characters appear as recessed portions;

said placing step includes placing the grating in contact with the reverse face of the card; and

the embossed characters are viewed along the viewing direction as relatively dark portions.

9. A method as set forth in claim 5, wherein said selecting step is performed in accordance with the expressions

$$d_1\ (\tan \theta + \tan \emptyset) = (N + 1/2)\ p$$

and $d_2\ (\tan \theta + \tan \emptyset) = Np,$

where $d_1$ is the distance between the grating and those portions of the card that are to appear dark, $d_2$ is the distance between the grating and those portions of the card that are to appear light, p is the pitch of the grating, and N is a positive integer.

**Fig.1**

LIGHT SOURCE
12
LENS SYSTEM
16
OCR DEVICE
18
θ φ
10a
14
10
10b

**Fig. 2.**

ILLUMINATION DIRECTION
DARK
OBSERVATION
LIGHT
θ φ
14
P
10a
10b
d

**Fig. 3**

LIGHT
ILLUMINATION DIRECTION
OBSERVATION
DARK
θ φ
14
10a
P
10b
d